# EUROPEAN PATENT APPLICATION

(11) **EP 4 299 474 A1**
(43) Date of publication of application: **03.01.2024**
(21) Application number: 22181258.9
(22) Date of filing: 27.06.2022
(51) Int. Cl.: B65G 1/02

(54) **BEAM BRACKET, A STORAGE SYSTEM AND METHOD OF ATTACHING TRANSVERSAL MEMBER TO A BEAM**

(71) Applicant: JMT-Jönköpings Montageteknik, 554 75 Jönköping (SE)
(72) Inventor: Onselius, Andreas, 554 75 Jönköping (SE); Carlsson, Thomas, 554 75 Jönköping (SE)
(74) Representative: AWA Sweden AB

(57) **Abstract**

The present disclosure relates to a beam bracket, storage system and a method of attaching a transversal member (2) to a beam (11) of a storage rack (1). The bream bracket (4) comprises a first portion (41), a second portion (42) arranged at a distance from the first portion (41) such that, when the beam bracket (4) is arranged to the beam (11), the beam (11) is clamped between the first portion (41) and the second portion (42). The beam bracket (4) further comprises at least one protrusion (47) extending from the first portion (41) and configured to engage with at least one aperture (23) of the at least one transversal member (2) and thereby fix the at least one transversal member (2) to the beam (11) when the beam bracket (4) is clamped to the beam (11).

## Description

### Technical field of the invention

The present disclosure relates to a beam bracket, a storage system and a method of attaching a transversal member to a storage rack.

### Background

At many warehouses storage racking systems are used to store goods. Storage racks may have shelves with beam structures. In order to increase the space efficiency of a storage racking system there may be used removable transversal members, onto which pallets may be stored and which lengthwise positions are adjustable along a shelf. When storing goods onto the transversal members it is important for safety reasons to have the transversal members firmly attached to beams of the racks.

There is therefore a need for a solution which mitigates the above mentioned problems and provides a secure attachment to the beam structure.

### Summary

It is an object of the present inventive concept to provide an improved solution which alleviates the mentioned drawbacks with present solutions. Furthermore, it is an object to provide a beam bracket configured to attach a transversal member to a beam of a storage rack. Moreover, it is an object to provide a storage system and a method of attaching a transversal member to a beam of a storage rack.

The invention is defined by the appended independent claims, with embodiments being set forth in the appended dependent claims, in the following description and in the drawings.

According to one aspect of the inventive concept there is provided a beam bracket configured to attach at least one transversal member to a beam of a storage rack, comprising a first portion, a second portion arranged at a distance from the first portion such that, when the beam bracket is arranged to the beam, the beam is clamped between the first portion and the second portion.

The beam bracket further comprises at least one protrusion extending from the first portion and configured to engage with at least one aperture of the at least one transversal member and thereby fix the at least one transversal member to the beam when the beam bracket is clamped to the beam.

The at least one protrusion may be in such contact with the at least one transversal member such that stress may be applied by the protrusion onto the transversal member, e.g. onto a surface adjacent to the aperture, towards the beam. The transversal member may be clamped between the protrusion and the beam and so be fixed to the beam.

The at least one protrusion may extend from the first portion. The first portion may extend in a first plane, and the protrusion may at least partly extend in the first plane. In one embodiment, at least a portion of the at least one protrusion may deviate from said first plane. The deviation may provide the protrusion in an angled, curved or bent shape. In one embodiment the at least one protrusion may be formed in an S shape. The angled or bent shape of the at least one protrusion may improve how the protrusion may engage with the aperture in the transversal member. The transversal member may comprise a longitudinal rail onto which a transversal bar is arranged. The longitudinal rail may extend in parallel to the beam, and the transversal bar may extend perpendicular to the longitudinal rail. The surface in which the aperture is provided may be part of the longitudinal rail.

The aperture of the transversal member may be formed in a surface of the transversal member extending substantially in parallel to the first plane in which the first portion of the beam bracket extends, when the at least one protrusion extends from said first portion. In one embodiment, the surface of the transversal member may extend in a common plane to a top surface of the beam, which top surface the first portion is configured to abut when the beam bracket is arranged to the beam.

The beam bracket may remove the need of using e.g. cable ties for attaching transversal members to storage racks. The beam bracket may be more abrasion resistant than cable ties and especially in an embodiment in which the beam bracket is made of steel. The present solution may be more cost effective if the beam brackets need to be replaced less often than cables ties. The beam bracket may further be reusable.

In one embodiment the beam bracket may comprise at least two protrusions each configured to engage with a respective transversal member to fix such transversal members to the beam when the beam bracket is clamped to the beam.

The inclusion of two protrusions may enable two transversal members to be attached to a beam by one beam bracket. The beam bracket may by attachment of two transversal members, with one protrusion each of the beam bracket engaged to an aperture of one transversal member, provide a fixed distance between two transversal members which are attached to one beam of the storage rack.

The beam bracket, with one or two protrusions, may provide a firm and safe attachment of transversal members onto the beam, and especially compared to cable ties. More than half of the circumference of the beams cross section may be engirded by the beam bracket. This may be important to prevent goods which are placed onto the transversal member from falling off. There may also be a risk of the transversal members to fall off the storage racks with the previous solutions when using forklifts since for instance cable ties easily may break. The present invention may decrease the risks for this to occur.

In one embodiment the beam bracket may further comprise a third portion connecting the first portion and the second portion.

The third portion may further contribute to the stability of the beam bracket so as stress from the beam bracket being applied in more directions, contributing to clamping the beam. The third portion may connect the first portion with the second portion.

In one embodiment the beam bracket may further comprise a lip portion extending from the second portion and opposing said third portion. The lip portion may contribute to the stability of the attachment of the beam bracket to the beam and thereby of the transversal portion to the beam since it may enable stress to be applied on another surface of the beam than the ones in contact with the first and second portion of the beam bracket. The lip portion may further contribute to the clamping of the beam by the beam bracket when arranged thereto.

In one embodiment the beam bracket may further comprise a flange portion which may be connected to the lip portion. The flange portion may be configured to be pressed by a user to detach the beam bracket from and/or attach the beam bracket to the beam.

The flange portion may enable stress to be applied which may be used to detach the beam bracket from and/or attach the beam bracket to the beam. This may be important since the transversal profile, when attached to the beam, is clamped towards the beam by the beam bracket. The flange portion may provide an easy way of applying stress to the lip portion of the beam bracket and press it passed said edge of the beam to release the clamping. The flange portion may e.g. be pushed or pulled by hand and so applying torque which may be higher with an increased length of the flange portion.

In one embodiment the flange portion may comprise an opening configured for a tool to be inserted to detach the beam bracket from and/or attach the beam bracket to the beam.

In order to apply larger stress to the flange portion than may be possible by hand, it may be beneficial to use a tool, especially for detachment of the beam bracket if the clamping tension is high. A tool, such as a crowbar or similar may for this purpose be inserted in the opening of the flange portion in order to press the lip portion around the edge of the beam.

In one embodiment the third portion of the beam bracket may extend perpendicular to the extension of the first and the second portions of the beam bracket. The third portion extending perpendicular to the first and second portion may enhance the use of the beam bracket for a beam with rectangular cross-section.

In one embodiment the at least one protrusion may be connected to the first portion of the beam bracket.

The connection of the protrusion to the first portion of the beam bracket may enhance the clamping of the transversal member between the protrusion and the beam since the first portion may, together with another portion of the beam bracket, be clamped to the beam.

In one embodiment the beam bracket may be configured to attach the at least one transversal member to the beam by a snap-fit function.

The snap-fit function may provide an easy way of attaching the transversal member onto the beam. By the snap-fit function the transversal member and the beam bracket may be clamped to the beam by e.g. pressing the lip portion around an edge of the beam. The flexibility of the material may provide the possibility to press the lip portion around said edge of the beam. The material may be elastic for small deflections which may provide the clamping. The elasticity of the beam bracket may be controlled by properties of the material and material thickness of the beam bracket. A suitable material and thickness may be selected for the beam bracket to achieve a desired strength of the clamping of the beam bracket to the beam, providing the snap-fit function of the beam bracket. A sound may be heard indicating that the lip portion is oriented to such a position that the transversal member is appropriately attached to the beam.

In one embodiment the beam bracket may be made of a material flexible enough to provide the snap-fit function. The beam bracket may be bended by applying stress by hand and the lip portion may snap towards the beam when the stress is released due to the flexibility of the material. The material of the beam bracket may thereby provide a resilient function to enable the snap-fit function.

In one embodiment the beam bracket may be made of metal, preferably steel. Steel may be a beneficial for the abrasion resistance, flexibility properties and strength of the beam bracket. Abrasion resistance may be needed for the beam bracket to be reused whereas the flexibility is needed for the snap-fit function so as the lip portion may be flexed around a corner of the beam. For the beam bracket not to break when using the snap-fit function it may be important for the material to have high strength.

In one embodiment the at least one transversal member may be configured to be placed across two opposing beams of a storage rack and the transversal bars may be configured to support pallets. The pallets may be placed on and removed from the transversal bars e.g. using a forklift. The beam bracket may enable safe handling of pallets when using transversal members with transversal bars. The beam bracket may prevent the transversal member to accidently be lifted when lifting a pallet. The beam brackets in combination with the transversal members may enable a more efficient use of space than in regular storage racking, while still providing safe and time efficient attachment and detachment of the transversal members.

In one embodiment said first portion and the second portion of the beam bracket may extend in parallel horizontal planes. The first and second portions extending in parallel planes may enhance the use of the beam bracket for a beam with rectangular cross-section or with a cross-section having two opposing parallel surface which the first and second portions may get in contact with respectively when arranged to the beam.

In one embodiment, the beam bracket may comprise at least two protrusions each configured to engage with a respective transversal member to fix such transversal member to the beam when the beam bracket is clamped to the beam. The beam bracket may thereby both fix the two transversal members to the beam, and fix the two transversal members in relation to each other, e.g. with a fixed distance to each other. The width of the beam bracket along the longitudinal extension of the beam may set the fixed distance between two transversal members along the longitudinal extension of the beam. The two protrusions may extend from the first portion of the beam bracket at respective ends of the beam bracket in the longitudinal direction.

According to a second aspect of the inventive concept there is provided a storage system comprising two beams extending in parallel, at least one transversal member extending between said two beams, said at least one transversal member comprising at least one aperture. The storage system further comprises said at least one beam bracket wherein the at least one beam bracket is configured to fix the at least one transversal member to at least one of said beams by engaging with said aperture and being clamped to said beam.

The storage system may provide convenient and space effective storing for which transversal members may be fixed to at least one of the beams and for which goods may be placed on the transversal members.

The at least one protrusion of the beam bracket may extend from the first portion. The first portion may extend in a first plane, and the protrusion may at least partly extend in the first plane. In one embodiment, at least a portion of the at least one protrusion may deviate from said first plane. The deviation may provide the protrusion in an angled, curved or bent shape. In one embodiment the at least one protrusion may be formed in an S shape. The angled or bent shape of the at least one protrusion may improve how the protrusion may engage with the aperture in the transversal member. The transversal member may comprise a longitudinal rail onto which a transversal bar is arranged. The longitudinal rail may extend in parallel to the beam, and the transversal bar may extend perpendicular to the longitudinal rail. The surface in which the aperture is provided may be part of the longitudinal rail.

The aperture of the transversal member may be formed in a surface of the transversal member extending substantially in parallel to the first plane in which the first portion of the beam bracket extends, when the at least one protrusion extends from said first portion. In one embodiment, the surface of the transversal member may extend in a common plane to a top surface of the beam, which top surface the first portion is configured to abut when the beam bracket is arranged to the beam.

In one embodiment the at least one aperture of the storage system is a first aperture at a first end of the transversal member adjacent to said first beam, and the transversal member may further comprise a second aperture at a second end of the transversal member adjacent to a second beam of said two beams. The storage system may further comprise a second beam bracket configured to fix the at least one transversal member to the second beam by engaging with the second aperture and being clamped to the second beam. Such attachment may be more stable than only attaching the transversal member to one of the beams.

According to a third aspect of the inventive concept there is provided a method of attaching a transversal member to a beam of a storage rack comprising the steps of engaging at least one protrusion of a beam bracket to at least one aperture of the at least one transversal member and to arranging the beam bracket to the beam such that the beam is clamped between first and second portions of the beam bracket.

The method may provide similar benefits as above described storage system and beam bracket. The beam bracket may be a beam bracket according to any of the embodiments described above.

### Brief description of drawings

These and other aspects of the present invention will now be described in more detail, with reference to the appended drawings showing exemplary embodiments of the present invention, wherein:
Fig. 1 illustrates a perspective view of a storage system with transversal members which are attached to a storage rack with beam brackets according to an embodiment of the invention.
Fig. 2a illustrates a perspective view of transversal members being clamped to a beam of the storage rack with a beam bracket from according to an embodiment of the invention.
Fig. 2b illustrates a perspective view from below of transversal members being clamped to a beam of the storage rack with a beam bracket according to an embodiment of the invention.
Fig. 3a illustrates a perspective view of a beam bracket according to an embodiment of the invention.
Fig. 3b illustrates a perspective view of a beam bracket according to an embodiment of the invention.
Fig. 4a illustrates a side view of first step of attaching a transversal member top a beam with a beam bracket according to an embodiment of the invention.
Fig. 4b illustrates a side view of a second step of attaching a transversal member top a beam with a beam bracket according to an embodiment of the invention.
Fig. 4c illustrates a side view of a beam bracket in an attached position with a transversal member being attached to a beam of a storage rack according to an embodiment of the invention.

### Detailed description

In the following detailed description, some embodiments of the present invention will be described. However, it is to be understood that features of the different embodiments are exchangeable between the embodiments and may be combined in different ways, unless anything else is specifically indicated. Even though in the following description, numerous details are set forth to provide a more thorough understanding of the present invention, it will be apparent to one skilled in the art that the present invention may be practiced without these details.

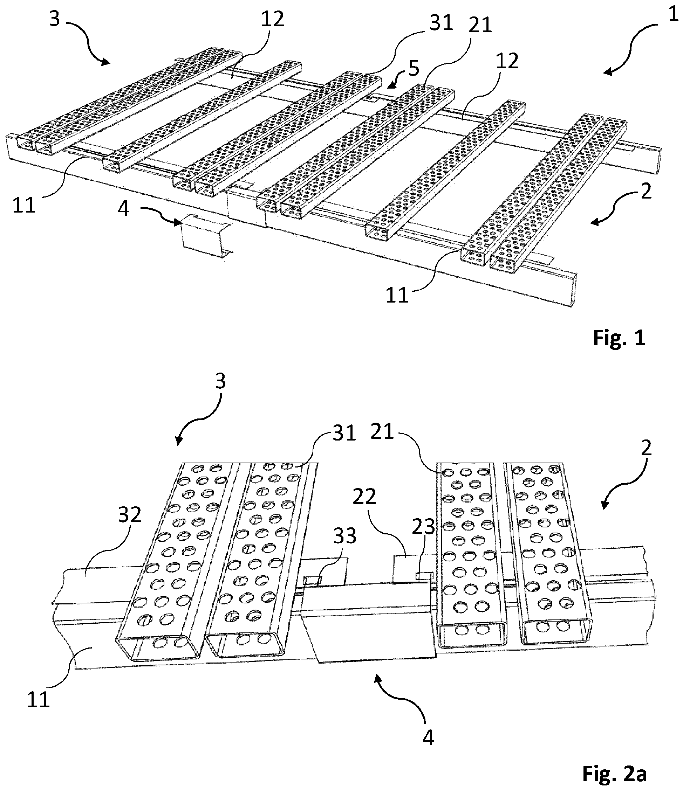

In Fig. 1 a storage system is illustrated, which comprises a storage rack 1 with two longitudinal beams 11, 12 which extend in parallel. On the storage rack 1 there are arranged transversal members 2, 3 which may be fixed to the longitudinal beams 11, 12 of the storage rack 1 with beam brackets 4, 5, respectively. Without attachment with beam brackets 4, 5, the transversal members are removable from, and movable along the longitudinal direction of, the storage rack 1. More transversal members may be placed on a storage rack 1 dependent on the length of the longitudinal beams 11, 12. The transversal members 2, 3 comprise longitudinal rails 22, 32, better seen in fig. 2a, with horizontal and vertical surfaces. The horizontal surface of a longitudinal rail comprises one or more apertures 23, 33 which is used for attachment of the transversal members 2, 3 to the beam 11, 12 by means of the beam bracket 4, 5. The vertical surfaces of the longitudinal rails 22, 32 are in contact with vertical surfaces of the beams 11, 12 and enhance appropriate orientation of the transversal members 2, 3 and prevent transversal movement relative the beams 11, 12. The transversal members 2, 3 further comprise transversal bars 21, 31 onto which goods may be stored and which may rest on the beams 11, 12. The longitudinal rails 22, 32 may be fixed to the transversal bars 21, 31, e.g. by welding. The horizontal surface of a longitudinal rail 22, 32 may extend in a plane being substantially common with an upper horizontal surface of the beam 11, 12 at which it is arranged.

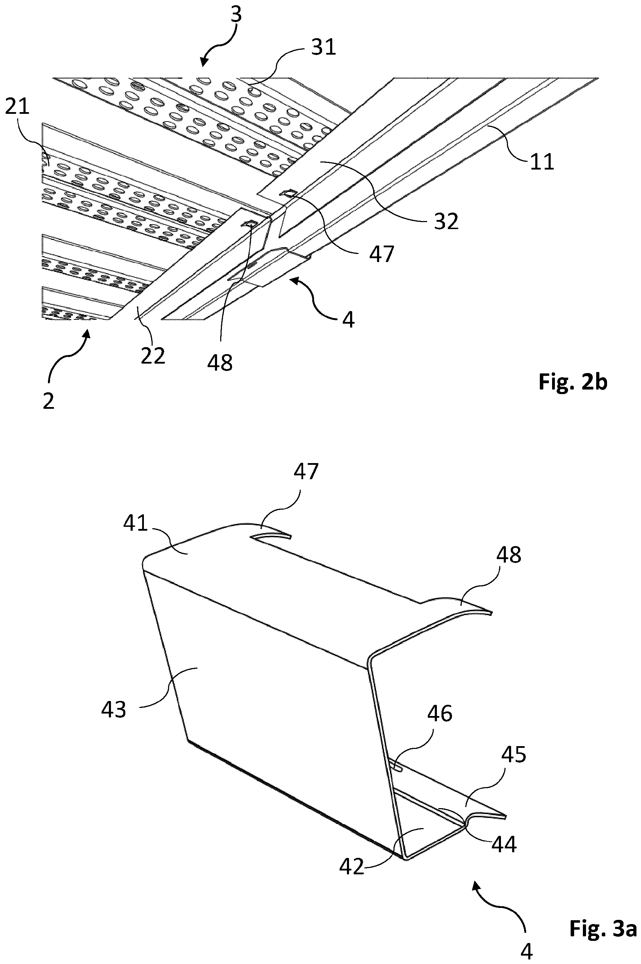

In Fig. 2a and 2b the clamping of the transversal members 2, 3 onto the beam 11 with the beam bracket 4 is shown from an upper and lower perspective, respectively. The beam bracket 4 clamps the transversal members 2, 3 onto the beam 11 by the protrusions 47, 48 extending through apertures 23, 33 of the transversal members 2, 3. A fixed distance between the beam members 2, 3 is thereby achieved.

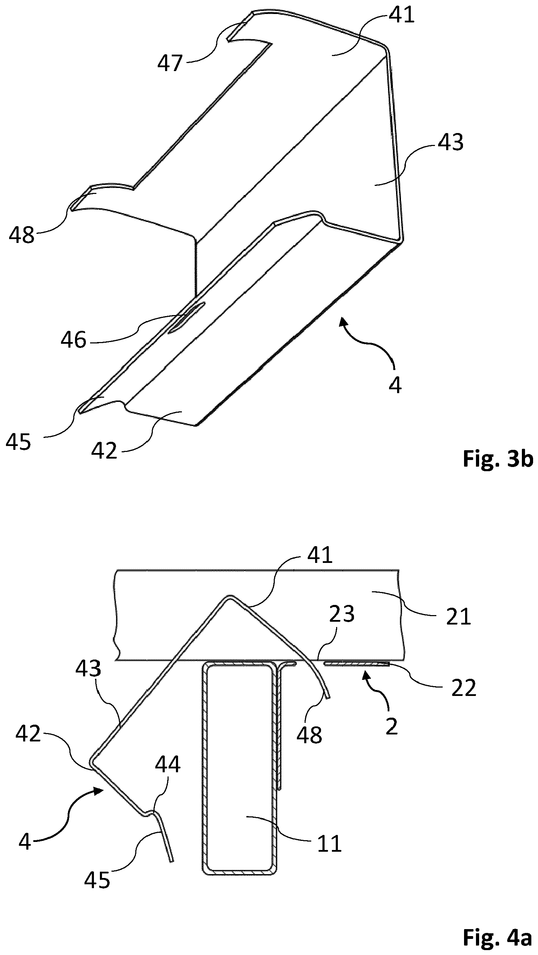

The beam bracket is seen in more detail in Figures 3a and 3b. The beam bracket 4 has a first portion 41 which may be in contact with an upper horizontal surface of the beam 11. A second portion 42 may be in contact with a lower horizontal surface of the beam 11. A third portion 43 may be in contact with a vertical portion of the beam 11.

The beam bracket 4 may comprise a lip portion 44 configured to be in contact with a corner or a vertical surface of the beam 11. The lip portion is further connected to a flange portion 45 extending on the opposite side of the lip portion 44 relative the second portion 42. The flange portion 45 is configured for application of stress which may be needed for the second portion 42 to pass the lower surface of the beam 11 in order for the beam bracket 4 to clamp the beam 11. The flange portion 45 comprises an opening 46 in which a tool may be inserted in order to apply more force than what is possible by hand in order to release the beam bracket 4 from the beam 11 when the beam bracket 4 is clamped to the beam 11.

The first and second portions 41, 42 extend in parallel planes. When arranged to the beam 11, the first portion 41 is in contact with the upper horizontal surface of the beam 11, and the protrusions 47, 48 extend from the first portion 41 passed the upper horizontal surface of the beam 11 to engage with the apertures 23, 33 of the transversal members 2, 3.

The first portion 41 of the beam bracket 4 is, when clamped to the beam 11, in contact with the upper horizontal surface of the beam 11, and extends in a first plane in parallel with the upper horizontal surface of the beam 11. The protrusion or protrusions 47, 48 extend from the first portion 41, possibly partly in the first plane, and then deviate from the first plane in an angled, curved or bent shape. The shape deviating from the first plane extends into the aperture 23, 33 of the transversal member 2, 3. The aperture 23, 33 may be provided on a horizontal surface of the longitudinal rail 22, 32 of the transversal member 2, 3, which horizontal surface may extend in a plane substantially common with the upper horizontal surface of the beam 11. When the beam bracket 4 is clamped to the beam 11, the protrusion 47, 48 engages with the aperture 23, 33 and the horizontal surface of the longitudinal rail 22, 32 such that the transversal member 2, 3 is fixed to the beam 11.

In alternative embodiments the beam 11 may have a different shape than the illustrated rectangular cross-section, and thereby the beam bracket 4 may in part have a different shape. Moreover, the beam bracket 4 does not have to be in direct contact with the beam 11, a film or layer may for instance be placed between the beam bracket 4 and the beam 11 to protect the beam 11 from abrasion. Furthermore, a beam bracket with only one protrusion 47 may be applicable near ends of the beam 11 in order to attach one transversal member 2 to the beam 11.

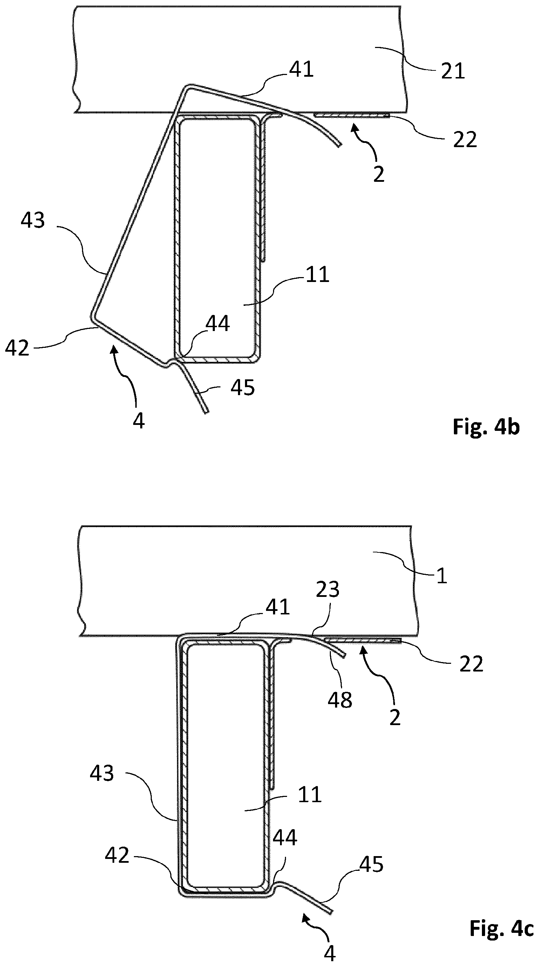

Figs. 4a-c illustrate steps of a method of arranging a beam bracket 4 to a beam 11 of a storage rack 1 to fix a transversal member 21 to the beam 11. In a first step, protrusions 47, 48 of the beam bracket 4 are led through apertures 23, 33 of the transversal members 2, 3 respectively.

Next, the beam bracket 4 is rotated such that the second portion 42 is moved under the beam 11. The second portion 42 with the lip portion 44 and the flange portion 45 is pushed to get in contact with a lower horizontal surface of the beam 11. At the same time the first portion 41 is moved into contact with the upper horizontal surface of the beam 11 while the protrusions 47, 48 remain in engagement with the apertures 23, 33 and the horizontal surface of the longitudinal rail 22.

When in the clamped position, as illustrated in fig. 4c, the lip portion 44, and flange portion 45 provides a snap-fit function such that the beam bracket 4 is clamped to the beam. When moved to this position, the flange portion 45 is pressed to move the lip portion 44.

To release the beam bracket 4 from the beam 11, the flange portion may be pushed or pressed in opposite direction, thereby also detaching the transversal members 2, 3 from the beam 11. The beam bracket 4 may be flexible enough to enable this movement to and from the clamped position, and thereby to provide the clamping. A tool may further be inserted in the opening 46 to apply the force needed to release the beam bracket 4 from the beam 11.

## Claims

1. A beam bracket (4) configured to attach at least one transversal member (2) to a beam (11) of a storage rack (1), the beam bracket comprising:
a first portion (41);
a second portion (42) arranged at a distance from the first portion (41) such that, when the beam bracket (4) is arranged to the beam (11), the beam (11) is clamped between the first portion (41) and the second portion (42); and
at least one protrusion (47, 48) extending from the first portion (41) and configured to engage with at least one aperture (23, 33) of the at least one transversal member (2) and thereby fix the at least one transversal member (2) to the beam (11) when the beam bracket (4) is clamped to the beam (11).

2. The beam bracket (4) according to claim 1, further comprising a third portion (43) connecting the first portion (41) and the second portion (42).

3. The beam bracket (4) according to claim 2, further comprising a lip portion (44) extending from the second portion (42) and opposing said third portion (43).

4. The beam bracket (4) according to claim 3, further comprising a flange portion (45) which is connected to the lip portion (44), said flange portion (45) being configured to be pressed by a user to detach the beam bracket (4) from and/or attach the beam bracket (4) to the beam (11).

5. The beam bracket (4) according to claim 4, wherein the flange portion (45) comprises an opening (46) configured for a tool to be inserted to detach the beam bracket (4) the beam bracket (4).

6. The beam bracket (4) according to any one of the claims 2-5, wherein the third portion (43) of the beam bracket (4) extends perpendicular to the extension of the first portion (41) and the second portion (42) of the beam bracket (4).

7. The beam bracket (4) according to any one of the preceding claims, wherein the at least one protrusion (47, 48) is connected to the first portion (41) of the beam bracket (4).

8. The beam bracket (4) according to any one of the preceding claims, wherein the beam bracket (4) is configured to attach the at least one transversal member (2, 3) to the beam (11) by a snap-fit function.

9. The beam bracket (4) according to claim 8, wherein the beam bracket is made of a material flexible enough to provide the snap-fit function.

10. The beam bracket (4) according to any one of the preceding claims, wherein the at least one protrusion (47, 48) extends from the first portion (41) in an angled, curved or bent shape.

11. The beam bracket (4) according to any one of the preceding claims, wherein the first portion (41) and the second portion (42) of the beam bracket (4) extend in parallel horizontal planes.

12. The beam bracket (4) according to any one of the preceding claims, wherein the beam bracket comprises at least two protrusions (47, 48) each configured to engage with a respective transversal member (2, 3) to fix such transversal member (2, 3) to the beam (11) when the beam bracket (4) is clamped to the beam (11).

13. A storage system comprising
two beams (11, 12) extending in parallel;
at least one transversal member (2) extending between said two beams (11, 12), said at least one transversal member (2) comprising at least one aperture (23, 33);
at least one beam bracket (4) according to any one of the claims 1-12, wherein the at least one beam bracket (4) is configured to fix the at least one transversal member (2) to a first beam of said two beams (11, 12) by the at least one protrusion (47, 48) of the beam bracket (4) engaging with said aperture (23, 33) and the beam bracket being clamped to said first beam (11).

14. The storage system according to claim 13, wherein said at least one aperture (47) is a first aperture at a first end of the transversal member (2) adjacent to said first beam (11), and the transversal member further comprises a second aperture at a second end of the transversal member (2) adjacent to a second beam (12) of said two beams (11, 12);
the storage system further comprising:
a second beam bracket configured to fix the at least one transversal member to the second beam (12) by engaging with the second aperture and being clamped to the second beam (12).

15. A method of attaching a transversal member (2) to a beam (11) of a storage rack (1) comprising the steps of:
engaging at least one protrusion (47) of a beam bracket (4) according to any one of claims 1-13 to at least one aperture (23) of the at least one transversal member (2); and
arranging the beam bracket (4) to the beam (11) such that the beam (11) is clamped between the first (41) and second portions (42) of the beam bracket (4).
